# EUROPÄISCHE PATENTSCHRIFT

(11) **EP 1 337 376 B1**
(45) Veröffentlichungstag und Bekanntmachung des Hinweises auf die Patenterteilung: **12.10.2005**
(21) Anmeldenummer: 00974298.2
(22) Anmeldetag: 07.09.2000
(51) Int. Cl.: B23K 35/26, B23K 35/30, B23K 35/14

(54) **LOTMITTEL ZUR VERWENDUNG BEI DIFFUSIONSLOTPROZESSEN**
SOLDERING FLUX FOR USE IN DIFFUSION SOLDERING PROCESS
BRASURE A UTILISER DANS DES PROCEDES DE BRASAGE PAR DIFFUSION

(43) Veröffentlichungstag der Anmeldung: 27.08.2003
(73) Patentinhaber: Infineon Technologies AG, 81669 München (DE)
(72) Erfinder: HÜBNER, Holger, 85598 Baldham (DE); KRIPESH, Vaidyanathan, Ind-chennai, Ashok Nagar 600 083 (IN)
(74) Vertreter: Schweiger, Martin
(86) Internationale Anmeldenummer: PCT/DE2000/003103
(87) Internationale Veröffentlichungsnummer: WO 2002/020211

(56) Entgegenhaltungen:
- WO-A-96/19314
- DE-A- 19 532 251
- FR-A- 2 706 139
- US-A- 3 839 780
- US-A- 5 053 195
- US-A- 6 027 575

## Beschreibung

Die vorliegende Erfindung betrifft ein Lötmittel zur Verwendung bei Diffusionslötprozessen nach dem Oberbegriff des Patentanspruchs 1 sowie eine Lotnaht hergestellt mit dem Lötmittel.

Diffusionslötprozesse sind allgemein zur Herstellung von Lötverbindungen zwischen Metallteilen, insbesondere auch zur Herstellung von Lötverbindungen zwischen elektronischen Schaltungssystemen und Substraten, anwendbar.

Unter elektronischen Schaltungssystemen werden im Rahmen vorliegender Erfindung Festkörperschaltungssysteme, insbesondere integrierte Halbleiterschaltkreise, verstanden. Speziell bezeichnet der Begriff System etwa bei einem integrierten Halbleiterschaltkreis den die elektronischen Schaltungsfunktionselemente, wie Transistoren, Dioden, Kapazitäten usw. enthaltenden Halbleitermaterialkörper sowie die darauf befindlichen, die Schaltungfunktionselemente verbindenden metallischen Leiterbahnen und Anschlußelemente. Die Anschlußelemente können u. a. flächige Metallbelegungen, sog. Pads sein.

Unter Substraten werden im Rahmen vorliegender Erfindung Schaltungsplatten wie gedruckte Schaltungen oder Schaltungsplatinen verstanden. Auch derartige Substrate besitzen Anschlußelemente der vorgenannten Art, ebenfalls in Form von Pads.

Lötmittel für Diffusionslötprozesse sind beispielsweise aus der US-PS 5 053 195 bekannt. Dabei handelt es sich um Amalgame aus einem flüssigen Metall bzw. einer flüssigen Metalllegierung und eines Metallpulvers, ggf. mit festen oder flüchtigen Zusätzen. Der genannten US-PS ist auch entnehmbar, dass sich solche Amalgame in vorteilhafter Weise zur festen Verbindung von elektronischen und mikroelektronischen Systemen eignen. Als flüssige Metalle bzw. Metallegierungen, bei denen es sich um Lote handelt, sind Gallium, Indium, Gallium/Zinn, Gallium/Indium und Gallium/Indium/Zinn angegeben, während als Metallpulver Antimon, Kobalt, Kupfer, Chrom, Germanium, Gold, Eisen, Nickel, Magnesium, Mangan, Platin, Silber und Vanadium angegeben sind.

Charakteristisch für einen Diffusionslötprozess ist es, dass mit einem niedrigschmelzenden Lot eine hochtemperaturfeste metallische Verbindung dadurch hergestellt wird, dass das Lotmetall mit zu verbindenden hochschmelzenden Metallen eine temperaturfeste und mechanisch sehr stabile intermetallische Phase bildet. Dabei wird das niedrigschmelzende Lot vollständig umgewandelt, d. h., es geht vollständig in der metallischen Phase auf. Dieser Prozeß ist diffusionsgesteuert und dauert um so länger, je dicker die Lotmetallschicht ist. Bei einer typischen Dicke der Lotmetallschicht von 2 µm dauert der Umwandlungsprozess wenige Minuten.

Da die große mechanische Stabilität von intermetallischen Phasen der vorgenannten Art auf ihrer geringen elastischen Verformbarkeit beruht, wird die Lotnaht bei zunehmender Dicke schnell brüchig. Daher muss die Breite der Lotnaht bei Diffusionsprozessen sehr klein, typischerweise kleiner als 10 µm, sein.

Gemäß der WO 96/19314 kann die Dicke der Lotnaht der intermetallische Phase beliebig hoch sein. Es wird dafür jedoch ein Brechen kleiner Teilbereiche der intermetallische Phase unter mechanischer Belastung aufgrund deren hohen Sprödigkeit bewusst in Kauf genommen, da ein Ausbreiten der Brüche oder Risse durch Füllkomponenten gemäß der WO 96/19314 verhindert werden kann und somit makroskopisch in der Lötung keine Bruchstelle auftritt.

Um die Voraussetzung von Lotnähten kleiner Breite zu gewährleisten, ist eine Voraussetzung, dass die zu verbindenden Teile sehr plane und glatte Oberflächen besitzen. Dies ist zwar in der Mikroelektronik oft gegeben. Bei anderen Anwendungen, so z. B. auch schon in der Leistungselektronik, sind aber die Oberflächen entweder nicht ausreichend formschlüssig oder wesentlich rauher, so dass sich die geringen Lotnahtbreiten nicht realisieren lassen.

Diffusionslötprozesse sind daher trotz ihrer mechanischen Vorteile bei größeren Lotnahtbreiten nicht mehr praktikabel.

Aus 1996 "Electronic Components and Technology Conference", Seiten 565-570 ist es bekannt, zur Verbindung von Objekten, wie Halbleiterschaltkreisen und gedruckten Schaltungen ein elektrisch leitendes Klebermaterial zu verwenden, das aus einem mit einem Metall niedrigen Schmelzpunktes (Lotmetall) überzogenen Füllerpulver, einem thermoplastischen Polymer-Kunststoff und weiteren geringfügigen organischen Zusätzen besteht. Dabei ist das Füllerpulver in Form von Körnern mit Lotmetall beschichtet, das bei einem Lötprozeß zur Herstellung einer Verbindung zwischen den Objekten zwecks Realisierung einer metallurgischen Verbindung zwischen benachbarten Füllerkörnern sowie zwischen Füllerkörnern und Anschlußelementen auf den zu verwendenden Objekten geschmolzen wird. Zur Herstellung einer mechanischen Verbindung zwischen den Objekten dient dabei der Kleber in Form des thermoplastischen Polymer-Kunststoffs. Solche Kleber sind jedoch nicht ausreichend temperaturfest, mechanisch nur gering belastbar, feuchteempfindlich, schlecht wärmeleitend und elektrisch nicht optimal. Darüber hinaus kann es bei Verbindungsnähten großer Dicke zwischen miteinander zu verbindenden Objekten, etwa wegen nicht planarer Oberflächen zu einer Entmischung der Komponenten des elektrisch leitenden Klebermaterials kommen, was die elektrische Leitfähigkeit weiter beeinträchtigt. Auch das bereits genannte Problem der Brüchigkeit von intermetallischen Phasen großer Dicke besteht weiter.

Der vorliegenden Erfindung liegt die Aufgabe zugrunde, ein Lötmittel für Diffusionslötprozesse sowie ein Verfahren zur Herstellung von Lötverbindungen unter Verwendung solcher Lötmittel anzugeben, die auch für große Lotnahtbreiten, insbesondere von mehr als 10 µm bis hin zu mehreren 100 µm, geeignet sind, und einfache mechanisch stabile, gegen äußere Reagenzien resistente und thermisch sowie elektrisch gut leitende Lötverbindungen gewährleisten.

Diese Aufgabe wird bei einem Lötmittel der gattungsgemäßen Art erfindungsgemäß durch die Merkmale des kennzeichnenden Teils des Patentanspruchs 1 gelöst.

Eine Lotnaht zwischen zwei Metallteilen, die mit dem erfindungsgemäßen Lötmittel hergestellt wird, ist Gegenstand des Patentanspruchs 15.

Der Kern der Erfindung ist darin zu sehen, dass mit einem ausschließlich ein Lotmetall bzw. eine Lotmetallegierung und ein Metall mit gegenüber denjenigen des Lotmetalls bzw. der Lotmetallegierung großen Schmelztemperatur allein durch deren Mengenverhältnis bei einem Diffusionslötprozeß die Dicke von dabei entstehenden intermetallischen Phasen so gering bleibt, dass deren elastische Verformbarkeit noch gewährleistet bleibt und gleichzeitig eine vollständig metallgefüllte Lotnaht entsteht. Unter "Dicke der intermetallischen Phase" ist dabei zu verstehen, dass die maximale Wandstärke einer durch sie gebildeten Schaumstruktur so beschaffen ist, daß deren Hohlräume mit Metall großer Schmelztemperatur gefüllt sind, diese Dicke also durch das Metall großer Schmelztemperatur festgelegt ist. Der Begriff "ausschließlich" bedeutet hier, daß in der fertigen Lotnaht keine Komponenten mehr enthalten sind, welche die elektrischen, mechanischen und/oder thermischen Eigenschaften des Systems Metall/intermetallische Phase nachteilig beeinflussen. Solche Komponenten können beispielsweise Lötpasten oder Flußmittel sein, die während des Lötprozesses entweichen.

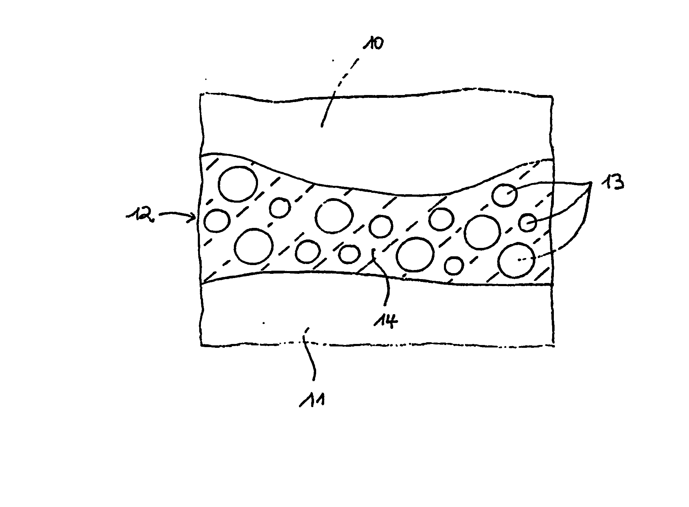

Die Erfindung wird nachfolgend anhand der einzigen Figur der Zeichnung, welche eine schematische Darstellung einer mittels des erfindungsgemäßen Lötmittels hergestellten Lotnaht zwischen zwei zu verbindenden Teilen zeigt, näher erläutert.

In der einzigen Figur der Zeichnung sind mit 10 und 11 zwei weggebrochen dargestellte Teile bezeichnet, welche durch eine aus einem erfindungsgemäßen Lötmittel durch einen Diffusionslötprozeß hergestellten Lotnaht 12 miteinander verbunden sind. Daß es sich hier um die Verbindung von zwei metallischen Teilen über eine vergleichsweise große Lotnaht handeln soll, sind Unebenheiten einander gegenüberstehender Oberflächen dieser Teile 10 und 11 schematisch gekrümmt dargestellt.

Das erfindungsgemäße Lötmittel enthält in einer nicht eigens dargestellten Lötpaste ein Lotmetall bzw. eine Lotmetallegierung - ebenfalls nicht eigens dargestellt - sowie Körner 13, die mindestens teilweise aus einem Metall mit einer gegenüber der Schmelztemperatur des Lotmetalls bzw. der Lotmetallegierung großer Schmelztemperatur bestehen.

Diese Körner 13 weisen mit einem Metall überzogene isolierende Kerne auf. Als Material für die isolierenden Kerne findet ein Stoff aus der Gruppe Silizium, Keramik, Glas, Polymere Verwendung.

Die Herstellung der Körner 13 in Form von mit einem Metall überzogenen isolierenden Kernen kann beispielsweise so erfolgen, wie dies in "JOURNAL OF MATERIALS SCIENCE" 28 (1993), S. 5207-5210 für eine stromlose Abscheidung von Silber auf Oxidkernen beschrieben ist.

In besonderer Ausgestaltung der Erfindung können die mindestens teilweise metallischen Körner 13 einen Durchmesser in der Größenordnung von 5 bis 100 µm besitzen.

Das - nicht eigens dargestellte - Lotmetall bzw. die Lotmetallegierung kann gemäß einer Ausführungsform der Erfindung als Überzug auf den mindestens teilweise metallischen Körnern 13 vorgesehen oder gemäß einer weiteren Ausführungsform in Form von Körnern zusammen mit den Körnern 13 in der Lötpaste enthalten sein. Im letzteren Fall haben die Körner aus Lotmetall bzw. einer Lotmetallegierung einen kleineren Durchmesser als die mindestens teilweise metallischen Körner 13.

Gemäß einer besonderen Ausführungsform der Erfindung kommen als Lotmetall bzw. Lotmetallegierung ein Metall aus der Gruppe Quecksilber, Gallium, Indium, Zinn, Blei, Wismut bzw. Legierungen daraus und als Metall mit gegenüber der des Lotmetalls bzw. der Lotmetallegierung großer Schmelztemperatur der Körner 13 - wie übrigens auch dasjenige der zu verbindenden Teile 10 und 11 - ein Metall aus der Gruppe Gold, Silber, Kupfer, Nickel in Betracht.

Bei Körner 13 in Form von mit einem Metall, beispielsweise Silber, überzogenen isolierenden Kernen, kann beispielsweise Zinn als Lotmetall stromlos auf dem Silberüberzug abgeschieden werden.

Die mindestens teilweise metallischen Körner 13 können gemäß einer bevorzugten Ausführungsform der Erfindung unterschiedliche Durchmesser besitzen, wie dies in der Figur der Zeichnung dargestellt ist. Damit läßt sich eine maximal dichte Füllung der Lotnaht 12 erreichen.

Gemäß einer weiteren Ausführungsform der Erfindung kann auch eine Kombination aus mit Lotmetall bzw. einer Lotmetallegierung überzogenen Kernen 13 und Kernen 13 ohne Überzug, also Kerne, die mindestens teilweise nur aus einem Metall mit großer Schmelztemperatur bestehen, vorgesehen werden.

Die Lötpaste kann neben dem Lotmetall bzw. der Lotmetallegierung und den mindestens teilweise metallischen Körnern 13 zusätzlich eine benetzende, beim Lötprozeß aus der Lotnaht 12 entweichende Flüssigkeit, ein die Oxidation von Metalloberflächen verhinderndes Flußmittel oder ein Hohlräume zwischen den Körnern 13 ausfüllender Füllstoff sein. Damit lassen sich in der Lotnaht 12 auch von den mechanischen und elektrischen Eigenschaften einer intermetallischen Phase abweichende Eigeschaften, beispielsweise ein bestimmter Wert der thermischen Ausdehnung, ein niedriger Wert der thermischen Leitfähigkeit oder eine hohe akustische Dämpfung realisieren. Derartige Zusatzkomponenten können ohne weiteres in der Form vorgesehen werden, daß sie die gewünschten Eigenschaften des Systems Metall/intermetallische Phase nicht beeinflussen.

Beim Verfahren zur Herstellung von Lötverbindungen unter Verwendung von Lötmitteln der vorstehend beschriebenen Ausführungsformen wird die Lötpaste auf die zu verbindenden Teile 10 und 11 aufgebracht, wonach diese zusammengesetzt werden und das Lötmittel über die Schmelztemperatur des Lotmetalls bzw. der Lotmetallegierung nicht aber über die Schmelztemperatur des Metalls der zu verbindenden Teile 10 und 11 und der Körner 13 erhitzt wird. Dabei reagiert das flüssige Lotmetall bzw. die flüssige Lotmetallegierung mit dem Metall der Körner 13 und der zu verbindenden Teile unter Bildung einer in der Figur der Zeichnung gestrichelt angedeuteten intermetallischen Phase 14 und gleichzeitiger Verfestigung, wobei die Lotmaterialmenge vollständig aufgebraucht wird.

Erfindungsgemäß ist gewährleistet, daß die Dicke der eine Schaumstruktur bildenden intermetallischen Phase 14 so beschaffen ist, daß deren Wandstärke zwischen den Körnern 13 so klein bleibt, daß sich, wie oben erläutert, die elastische Verformbarkeit ergibt. Die Hohlräume in der Schaumstruktur werden durch das Metall mit großer Schmelztemperatur ausgefüllt, d.h., die Dicke bzw. Wandstärke wird durch dieses Metall festgelegt. Es sei erwähnt, daß die Packungsdichte der Körner 13 in der Figur aus Übersichtlichkeitsgründen geringer dargestellt ist, als dies bei einer erfindungsgemäß hergestellten Lotnaht 12 in der Realität der Fall ist. Es sei ebenfalls darauf hingewiesen, daß "Dicke bzw. Wandstärke" nicht die Gesamtdicke der Lotnaht 12 bedeutet.

Das erfindungsgemäße Lötmittel bietet den Vorteil, daß die gesamte Lotnaht auch großer Breite durch das System Metall/intermetallische Phase vollständig ausgefüllt wird, ohne daß die intermetallische Phase 14 selbst irgendwo mehr als wenige µm dick wird. Die Hohlräume dieses Gebildes werden durch die mindestens teilweise metallischen Körner 13 und ggf. auch durch zusätzliche Füllstoffe ausgefüllt.

Über die mindestens teilweise metallischen Kerne 13 und die intermetallische Phase 14 kann neben der mechanisch stabilen, gegen äußere Reagenzien resistenten Verbindung zwischen Teilen 10 und 11 eine elektrisch und thermisch gut leitende Verbindung zwischen diesen hergestellt werden.

## Patentansprüche

1. Lötmittel zur Verwendung bei einem Diffusionslötprozess zur Herstellung von Lötverbindungen zwischen Metallteilen (10, 11), das in einer Lötpaste die folgenden Bestandteile aufweist:
- ein Lotmetall oder eine Lotmetalllegierung
- ein Metall mit einer gegenüber der Schmelztemperatur des Lotmetalls bzw. der Lotmetalllegierung hohen Schmelztemperatur, wobei
- das Metall mit hoher Schmelztemperatur in Form von mindestens teilweise metallischen Körnern (13), die einen isolierenden Kern aufweisen, vorgesehen ist,
- das Material für die isolierenden Kerne einen Stoff aus der Gruppe Silizium, Keramik, Glas, Polymere aufweist, und
- bei einem Lötprozess das Lotmetall oder die Lotmetalllegierung, das Metall der miteinander zu verbindenden Teile (10, 11) und das Metall hoher Schmelztemperatur eine intermetallische Phase (14) bilden,
wobei
das Metall mit hoher Schmelztemperatur und das Lotmetall bzw. die Lotmetalllegierung in einem solchen Mengenverhältnis vorhanden sind, dass das Lotmetall bzw. die Lotmetalllegierung unter Bildung der intermetallischen Phase vollständig reagiert und das Metall mit hoher Schmelztemperatur in einer solchen Menge erhalten bleibt, dass in einer Lötverbindung zwischen Metallteilen (10, 11) eine vollständig metallische, elektrisch leitende Lotnaht (12) vorhanden ist, in der die maximale Dicke der dabei entstehenden intermetallischen Phase (14) zwischen den Körnern so gering bleibt, dass deren elastische Verformbarkeit noch gewährleistet bleibt.

2. Lötmittel nach Anspruch 1,
**dadurch gekennzeichnet, dass**
die teilweise metallischen Körner (13) unterschiedliche Durchmesser aufweisen.

3. Lötmittel nach einem der vorigen Ansprüche,
**dadurch gekennzeichnet, dass**
das Lötmetall bzw. die Lötmetalllegierung als Überzug auf den teilweise metallischen Körnern (13) vorgesehen ist.

4. Lötmittel nach einem der vorigen Ansprüche,
**dadurch gekennzeichnet, dass**
das Lötmetall bzw. die Lötmetalllegierung in Form von Körnern in der Lötpaste vorgesehen ist.

5. Lötmittel nach einem der vorigen Ansprüche,
**dadurch gekennzeichnet, dass**
mit Lötmetall bzw. einer Lötmetalllegierung überzogene teilweise metallische Körner (13) und überzugsfreie Körner (13) vorgesehen sind.

6. Lötmittel nach einem der vorigen Ansprüche,
**dadurch gekennzeichnet, dass**
das Metall hoher Schmelztemperatur ein metall aus der Gruppe Gold, Silber, Kupfer, Nickel aufweist.

7. Lötmittel nach einem der vorigen Ansprüche,
**dadurch gekennzeichnet, dass**
das Lötmetall oder die Lötmetalllegierung ein Metall aus der Gruppe Quecksilber, Gallium, Indium, Zinn, Blei, Wismut bzw. Legierungen daraus aufweist.

8. Lötmittel nach einem der vorigen Ansprüche,
**dadurch gekennzeichnet, dass**
das Metall hoher Schmelztemperatur Kupfer und das Lötmetall Zinn ist.

9. Lötmittel nach einem der vorigen Ansprüche,
**dadurch gekennzeichnet, dass**
das Metall hoher Schmelztempratur Silber und das Lötmetall Zinn ist.

10. Lötmittel nach einem der vorigen Ansprüche,
**dadurch gekennzeichnet, dass**
die teilweise metallischen Körner (13) einen Durchmesser in der Größenordnung von 5 bis 100 µm aufweisen.

11. Lötmittel nach einem der vorigen Ansprüche,
**dadurch gekennzeichnet, dass**
das Lötmetall bzw. die Lötmetalllegierung als Überzug auf teilweise metallischen Körnern (13) eine Schichtdicke in der Größenordnung von 200 nm aufweisen.

12. Lötmittel nach einem der vorigen Ansprüche,
**dadurch gekennzeichnet, dass**
die Lötpaste zusätzlich ein flüssiges Lösungsmittel enthält, das bei Erwärmung während des Lötprozesses aus einer Lötnaht (12) flüchtig ist.

13. Lötmittel nach einem der vorigen Ansprüche,
**dadurch gekennzeichnet, dass**
die Lötpaste ein Flussmittel aufweist.

14. Lötmittel nach einem der vorigen Ansprüche,
**dadurch gekennzeichnet, dass**
die Lötpaste einen Füllstoff aufwiest.

15. Lotnaht zwischen zwei Metallteilen (10, 11) hergestellt mit einem Lötmittel nach einem der vorigen Ansprüche, die die folgenden Merkmale aufweist:
- Körner (13), die mindestens teilweise ein Metall mit einer gegenüber der Schmelztemperatur des Lotmetalls bzw. der Lotmetalllegierung hohen Schmelztemperatur und isolierende Kerne aufweisen,
- eine intermetallische Phase (14), die eine Schaumstruktur bildet, deren Wandstärke zwischen den Körnern (13) nicht mehr als wenige µm dick ist, so dass die Lotnaht elastisch verformbar ist, und deren Hohlräume durch die Körner ausgefüllt sind.

## Claims

1. Soldering agent for use in a diffusion soldering process for the production of soldered joins between metal parts (10, 11), which, in a soldering paste, includes the following constituents:
- a solder metal or a solder metal alloy
- a metal with a high melting point compared to the melting point of the solder metal or solder metal alloy, wherein
- the metal with a high melting point is provided in the form of at least partially metallic grains (13) which have an insulating core,
- the material for the insulating cores includes a substance selected from the group consisting of silicon, ceramic, glass, polymers, and
- in a soldering process, the solder metal or solder metal alloy, the metal of the parts (10, 11) which are to be joined to one another and the metal with a high melting point form an intermetallic phase (14),
the metal with a high melting point and the solder metal or solder metal alloy being present in a quantitative ratio which is such that the solder metal or solder metal alloy reacts completely to form the intermetallic phase, and the metal with a high melting point is retained in a quantity which is such that in a soldered join between metal parts (10, 11) there is a fully metallic, electrically conductive solder seam (12) in which the maximum thickness of the intermetallic phase (14) formed between the grains remains so low that the elastic deformability thereof is still ensured.

2. Soldering agent according to Claim 1, **characterized in that** the partially metallic grains (13) have different diameters.

3. Soldering agent according to one of the preceding claims, **characterized in that** the soldering metal or the soldering metal alloy is provided as a coating on the partially metallic grains (13).

4. Soldering agent according to one of the preceding claims, **characterized in that** the soldering metal or the soldering metal alloy is provided in the form of grains in the soldering paste.

5. Soldering agent according to one of the preceding claims, **characterized in that** partially metallic grains (13) coated with soldering metal or a soldering metal alloy and coating-free grains (13) are provided.

6. Soldering agent according to one of the preceding claims, **characterized in that** the metal with a high melting point includes a metal selected from the group consisting of gold, silver, copper, nickel.

7. Soldering agent according to one of the preceding claims, **characterized in that** the soldering metal or the soldering metal alloy includes a metal selected from the group consisting of mercury, gallium, indium, tin, lead, bismuth or alloys thereof.

8. Soldering agent according to one of the preceding claims, **characterized in that** the metal with a high melting point is copper and the soldering metal is tin.

9. Soldering agent according to one of the preceding claims, **characterized in that** the metal with a high melting point is silver and the soldering metal is tin.

10. Soldering agent according to one of the preceding claims, **characterized in that** the partially metallic grains (13) have a diameter of the order of magnitude of from 5 to 100 µm.

11. Soldering agent according to one of the preceding claims, **characterized in that** the soldering metal or the soldering metal alloy, as a coating on partially metallic grains (13), has a layer thickness of the order of magnitude of 200 nm.

12. Soldering agent according to one of the preceding claims, **characterized in that** the soldering paste additionally contains a liquid solvent which is sufficiently volatile to be expelled from a soldered seam (12) during heating forming part of the soldering process.

13. Soldering agent according to one of the preceding claims, **characterized in that** the soldering paste includes a flux.

14. Soldering agent according to one of the preceding claims, **characterized in that** the soldering paste includes a filler.

15. Solder seam between two metal parts (10, 11) produced using a soldering agent according to one of the preceding claims, which seam includes the following features:
- grains (13) which at least partially include a metal with a high melting point compared to the melting point of the solder metal or the solder metal alloy, and insulating cores,
- an intermetallic phase (14), which forms a foam structure, the wall thickness of which between the grains (13) is no more than a few µm thick, so that the solder seam is elastically deformable, and the cavities of which foam structure are filled by the grains.

## Revendications

1. Brasure à utiliser dans un procédé de brasage par diffusion pour la réalisation d'assemblages brasés entre des pièces métalliques (10, 11), qui présente les composants suivants dans une pâte de brasage:
- un métal de brasage ou un alliage métallique de brasage
- un métal avec une température de fusion élevée par rapport à la température de fusion du métal de brasage respectivement de l'alliage métallique de brasage, dans lequel
- le métal à haute température de fusion est prévu sous la forme de grains au moins partiellement métalliques (13), qui présentent un noyau isolant,
- le matériau pour les noyaux isolants comprend une matière du groupe silicium, céramique, verre, polymères, et
- lors d'un procédé de brasage, le métal de brasage ou l'alliage métallique de brasage, le métal des pièces à assembler l'une à l'autre (10, 11) et le métal à haute température de fusion forment une phase intermétallique (14),
dans lequel le métal à haute température de fusion et le métal de brasage, respectivement l'alliage métallique de brasage sont présents dans un tel rapport massique que le métal de brasage, respectivement l'alliage métallique de brasage réagissent entièrement en formant la phase intermétallique et le métal à haute température de fusion subsiste en une quantité telle qu'il existe, dans un assemblage brasé entre les pièces métalliques (10, 11), une brasure électriquement conductrice entièrement métallique (12), dans laquelle l'épaisseur maximale de la phase intermétallique (14) ainsi créée entre les grains reste tellement faible que sa déformabilité élastique soit encore garantie.

2. Brasure selon la revendication 1, **caractérisée en ce que** les grains partiellement métalliques (13) présentent des diamètres différents.

3. Brasure selon l'une quelconque des revendications précédentes, **caractérisée en ce que** le métal de brasage respectivement l'alliage métallique de brasage est prévu comme revêtement sur les grains partiellement métalliques (13).

4. Brasure selon l'une quelconque des revendications précédentes, **caractérisée en ce que** le métal de brasage respectivement l'alliage métallique de brasage est prévu sous la forme de grains dans la pâte de brasage.

5. Brasure selon l'une quelconque des revendications précédentes, **caractérisée en ce qu'**il est prévu des grains partiellement métalliques (13) revêtus de métal de brasage respectivement d'alliage métallique de brasage et des grains (13) sans revêtement.

6. Brasure selon l'une quelconque des revendications précédentes, **caractérisée en ce que** le métal à haute température de fusion comprend un métal du groupe or, argent, cuivre, nickel.

7. Brasure selon l'une quelconque des revendications précédentes, **caractérisée en ce que** le métal de brasage ou l'alliage métallique de brasage comprend un métal du groupe mercure, gallium, indium, étain, plomb, bismuth, ou des alliages de ceux-ci.

8. Brasure selon l'une quelconque des revendications précédentes, **caractérisée en ce que** le métal à haute température de fusion est le cuivre et le métal de brasage est l'étain.

9. Brasure selon l'une quelconque des revendications précédentes, **caractérisée en ce que** le métal à haute température de fusion est l'argent et le métal de brasage est l'étain.

10. Brasure selon l'une quelconque des revendications précédentes, **caractérisée en ce que** les grains partiellement métalliques (13) présentent un diamètre de l'ordre de grandeur de 5 à 100 µm.

11. Brasure selon l'une quelconque des revendications précédentes, **caractérisée en ce que** le métal de brasage respectivement l'alliage métallique de brasage présente, comme revêtement sur des grains partiellement métalliques (13), une épaisseur de couche de l'ordre de grandeur de 200 nm.

12. Brasure selon l'une quelconque des revendications précédentes, **caractérisée en ce que** la pâte de brasage contient en outre un solvant liquide, qui est volatil à partir du joint brasé (12) lors du chauffage pendant le procédé de brasage.

13. Brasure selon l'une quelconque des revendications précédentes, **caractérisée en ce que** la pâte de brasage comprend un fondant.

14. Brasure selon l'une quelconque des revendications précédentes, **caractérisée en ce que** la pâte de brasage comprend une matière de charge.

15. Joint brasé entre deux pièces métalliques (10, 11) réalisé avec une brasure selon l'une quelconque des revendications précédentes, qui présente les caractéristiques suivantes:
- des grains (13), qui comportent au moins en partie un métal avec une température de fusion élevée par rapport à la température de fusion du métal de brasage respectivement de l'alliage métallique de brasage, et des noyaux isolants,
- une phase intermétallique (14), qui forme une structure cellulaire, dont l'épaisseur de paroi entre les grains (13) n'a pas plus de quelques µm d'épaisseur, de sorte que le joint brasé soit élastiquement déformable, et dont les vides sont occupés par les grains.
